# EUROPÄISCHE PATENTSCHRIFT

(11) **EP 3 122 822 B1**
(45) Veröffentlichungstag und Bekanntmachung des Hinweises auf die Patenterteilung: **24.04.2019**
(21) Anmeldenummer: 15711535.3
(22) Anmeldetag: 24.03.2015
(51) Int. Cl.: C09D 4/06, C08F 222/06, C08F 222/10

(54) **BESCHICHTUNGSMITTEL UND FOLIEN MIT ERHÖHTER MECHANISCHER UND CHEMISCHER BESTÄNDIGKEIT SOWIE AUSREICHENDER VERFORMBARKEIT IN 2D-FILM-INSERT-MOLDING-VERFAHREN**
COATING AGENT AND FILMS WITH INCREASED MECHANICAL AND CHEMICAL RESISTANCE AND SUFFICIENT FORMABILITY IN A 2D-FILM-INSERT-MOULDING-PROCESS
MOYEN DE REVÊTEMENT ET FILM DOTÉ D'UNE RÉSISTANCE MÉCANIQUE ET CHIMIQUE ACCRUE AINSI QUE D'UNE DÉFORMABILITÉ SUFFISANTE DANS UN PROCÉDÉ DE FILM-INSERT-MOLDING EN 2D

(30) Priorität: 27.03.2014 EP 14161939
(43) Veröffentlichungstag der Anmeldung: 01.02.2017
(73) Patentinhaber: Covestro Deutschland AG, 51373 Leverkusen (DE)
(72) Erfinder: KOSTROMINE, Serguei, 53913 Swisttal (DE); PETZOLDT, Joachim, 40789 Monheim (DE); LAUTWEIN, Kay, 51061 Köln (DE); KÜNZEL, Roland, 51381 Leverkusen (DE)
(74) Vertreter: Levpat
(86) Internationale Anmeldenummer: PCT/EP2015/056212
(87) Internationale Veröffentlichungsnummer: WO 2015/144680

(56) Entgegenhaltungen:
- EP-A1- 1 884 959
- WO-A1-2014/198749
- WO-A1-2014/198750
- WO-A2-2004/082926

## Beschreibung

Die vorliegende Erfindung betrifft ein Beschichtungsmittel, dass sich insbesondere zur Beschichtung von Folien eignet und zu einer kratzfesten und lösemittelbeständigen Oberfläche führt, sowie mit dem Beschichtungsmittel beschichtete Folien. Die vorliegende Erfindung betrifft aufgrund der Eigenschaften der beschichteten Folien in 2D-Film-insert-molding-Verfahren ein Herstellungsverfahren für Formkörper sowie mit dem Beschichtungsmittel und den beschichteten Folien erhältliche Formkörper.

Für eine Vielzahl von Anwendungen werden Kunststoffformkörper benötigt, welche einfach herstellbar sind und deren Oberfläche gegen äußere Einflüsse geschützt ist. Für die Herstellung von solchen Kunststoffformkörpern in Spritzgussverfahren hat sich die Film-Insert-Molding-Technologie etabliert. Sie sieht vor, dass die Frontoberfläche eines Formkörpers zuerst aus einer beschichteten Folie zwei- oder dreidimensional vorgefertigt wird und danach mit einer Kunststoffschmelze von der Rückseite gefüllt bzw. hinterspritzt wird.

WO-A 2004/082926 offenbart ein Verfahren zum Hinterspritzen von dekorierten Folien mit einem thermoplastischen Kunststoff, bei dem die dekorierte Folie vor Auswaschungen geschützt ist.

EP-A 1884959 offenbart strahlenhärtbare Zusammensetzungen umfassend ein Polymer oder Copolymer und ein (Meth)acrylat Monomer mit mehr als einer (Meth)acrylatgruppe und zwei oder mehr Ethylenoxideinheiten pro Monomer , die als Deckschichten für Phosphor- oder Scintillatorverwendet werden.

Dabei ist es oft erwünscht, dass die Frontseite der Formkörper gegen chemische und mechanische Einwirkungen ausreichend geschützt ist. Dieses wird im Stand der Technik oftmals durch eine entsprechende Beschichtung oder Lackierung der Oberfläche erreicht. Um eine Nassbeschichtung der fertigen Teile zu vermeiden, ist es dabei vorteilhaft, dass eine solche Lackierung oder Beschichtung schon auf der Folie aufgebracht ist, welche dann zusammen mit der Folie alle weiteren Umformungsschritte durchläuft.

Für solch vorgefertigte Folien gibt es zwei Varianten zur Weiterverarbeitung, die unterschiedliche Anforderungen an die Beschichtung stellen.

Eine Variante ist die so genannte 3-D-Verformung. Die Folie mit der Beschichtung wird stark thermisch verformt. Die Beschichtung soll sich mit dem Substrat rissfrei stark und bis in kleinste Radien verformen lassen. Sie soll thermoplastisch und zu diesem Moment noch nicht vernetzt sein. Nach der Verformung wird die Beschichtung in einem zweiten technologischen Schritt durch UV-Bestrahlung und die dadurch verursachte Vernetzung endgültig gehärtet. So entsteht eine kompliziert gestaltete vordere Oberfläche eines 3-D-Kunstoffteiles, die in allen auch in stark verformten Stellen komplett geschützt ist. Die Folienbeschichtungen, die für diese Technologie geeignet sind, nennt man mit dem Fachbegriff "Formable Hardcoating", nämlich eine Folienbeschichtung, die zuerst ausreichend blockfest ist, sich dann aber zusammen mit dem Substrat thermisch beliebig verformen lässt und am Ende durch UV-Härten die Eigenschaften einer Schutzschicht bekommt. Damit beschichtete Kunststofffolien sind also thermisch verformbar und bekommen durch die nachfolgende Behandlung mit UV-Strahlung eine kratzfeste und besonders lösemittelbeständige Oberfläche. Nach dem Hinterspritzen dieser Folienprodukte mit PolymerSchmelze (Film insert Molding) entstehen die gewünschten Kunststoffformkörper.

Solche Kombination - Blockfestigkeit und thermoplastisches Verhalten der primären Beschichtung zusammen mit dem großen latenten Potential zur UV-Vernetzung - ist schwer zu realisieren und erfordern nach der Verformung einen UV Härteschritt des verformten Folienteils, bei dem beachtet werden muss, dass die gleichmäßige Bestrahlung der Folienflächen durch die dreidimensionale Ausformung erschwert wird. Der Prozess von 3D-Verformung ist also raffiniert, aber anspruchsvoll. Er braucht speziell konzipierte beschichtete Substrate und vor allem eine spezielle technologische Ausrüstung für die Schritte der Verformung und der UV-Aushärtung.

Neben den beschriebenen anspruchsvoll geformten Kunststoffteilen- und formkörpern gibt es eine große Anzahl von Kunststoffformkörpern, die weniger kompliziert aufgebaut sind und über die sogenannte 2-D Verformung zugänglich werden.

So werden für eine Vielzahl von Anwendungen Kunststoffformteile benötigt, welche eine leicht gebogene vordere Oberfläche mit etwas gebogenen Kanten aufweisen. Dabei ist es insbesondere erwünscht, dass die Oberfläche dieser Teile durch eine mit einer Schutzschicht ausgestatteten Folie vor mechanischen und chemischen Einflüssen geschützt ist. Die Herstellung solcher Teile erfolgt üblicherweise in einer Spritzgussmaschine in einem Schritt. Dabei wird ein zugeschnittenes flaches (2-D) Stück einer beschichtete Folie in eine Spritzgussform eingelegt und mit einer Kunststoffschmelze bei hoher Temperatur gegen eine vorgefertigte geformte Formwand unter hohem Druck gepresst. Eine leichte Verformung der Folie erfolgt also simultan in einem Schritt mit dem Hinterspritzen. Dann soll das Kunststoffteil fertig sein. Weitere Behandlungsschritte, wie beispielsweise ein Härtungsschritt der Beschichtung der Folie, sind in diesem Fall nicht vorgesehen oder gewünscht. Das bedeutet, dass die Schutzfunktion der Beschichtung auf der Folie vor deren Einsatz in einem solchen 2D-Film-Insert-Molding-Verfahren bereits voll aufgebaut sein soll.

Eine hohe Kratzbeständigkeit und ein hoher Lösemittelschutz können in der Regel nur durch eine hohe Vernetzungsdichte innerhalb der Beschichtung der Folie erreicht werden. Solche Schichten sind in der Regel hart, steif, brüchig und können sogar bei erhöhten Temperaturen zusammen mit dem Substrat nicht rissfrei verformt werden. Eine hohe Schutzwirkung der Lackbeschichtung und ihre Verformbarkeit sind also Gegensätze.

Ein Beschichtungsmittel, welches als Beschichtung einer Folie für eine gute Kratz- und Lösemittelbeständigkeit sorgt, zusammen mit der Folie dann aber in einem Film-Insert-Molding-Verfahren, insbesondere in einem FIM-2D-Verfahren, ausreichend thermisch verformbar ist, ist wünschenswert, aber schwer zu realisieren.

Ein Gegenstand der vorliegenden Erfindung ist daher ein Beschichtungsmittel, umfassend
(a) mindestens ein thermoplastisches Polymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator; und
(d) mindestens ein organischen Lösungsmittel,
wobei der Anteil an ethylenisch ungesättigten Gruppen mindestens 3 mol pro kg des Festanteils des Beschichtungsmittels beträgt,
wobei der mindestens eine Reaktivverdünner mindestens drei polymerisierbare (Meth)acrylatfunktionen im Molekül aufweist und
wobei die Ester-Sauerstoff-Atome der (Meth)acrylatfunktionen im Molekül des Reaktivverdünners durch eine Kette von mindestens sechs Atomen voneinander getrennt sind.

Das erfindungsgemäße Beschichtungsmittel kann einfach mit dem Fachmann bekannten Maßnahmen auf Folien appliziert werden und dort besonders vorteilhaft nach Trocknen und UV-Härten als Formable Hardcoat dienen. Vorteilhafterweise können die mit dem erfindungsgemäßen Beschichtungsmittel erhältlichen Beschichtungen eine Kombination aus Blockfestigkeit, Kratz- und Lösemittelbeständigkeit und einer zumindest für 2D-FIM-Verfahren ausreichende thermische Verformbarkeit aufweisen.

Von besonderer Bedeutung für die erfindungsgemäßen Eigenschaften des Beschichtungsmittels ist der Reaktivverdünner, der besondere Anforderungen zu erfüllen hat. Bei dessen Aushärtung soll ein großer Anteil des löslichen thermoplastischen Polymers so eingeschlossen werden, dass die resultierende Beschichtung eine hohe Lösemittelbeständigkeit aufweist. Hierbei hat der Anteil an ethylenisch ungesättigten Gruppen wesentlichen Einfluss auf die erreichbaren Beständigkeitseigenschaften der mit Strahlung gehärteten Beschichtung. Daher weist das erfindungsgemäße Beschichtungsmittel einen Gehalt von mindestens 3 mol ethylenisch ungesättigten Gruppen pro kg Feststoffgehalt des Beschichtungsmittel auf. Dieser Gehalt ist dem Fachmann unter dem Begriff Doppelbindungsdichte bekannt. Bevorzugt enthält das erfindungsgemäße Beschichtungsmittel einen Gehalt von mindestens 3,5 mol, besonders bevorzugt von 4 mol ethylenisch ungesättigten Gruppen pro kg Feststoffgehalt des Beschichtungsmittel. Zu diesem Zweck weist der Reaktivverdünner mindestens drei polymerisierbare (Meth)acrylatfunktionen im Molekül auf.

Ein weiteres, in Kombination mit der Doppelbindungsdichte essentielles Merkmal des Reaktivverdünners ist die minimale Länge des Verbindungsgliedes zwischen zwei polymerisierbaren (Meth)acrylat-Gruppen im Molekül des Reaktivverdünners. Darunter versteht man die Anzahl der Atome, die eine offene Kette des Verbindungsgliedes zwischen zwei Ester-Sauerstoffatomen der mindestens drei (Meth)acrylatfunktionen im Molekül des Reaktivverdünners bilden. Erfindungsgemäße sind die Ester-Sauerstoff-Atome der mindestens drei (Meth)acrylatfunktionen durch eine Kette von mindestens sechs Atomen voneinander getrennt. Dadurch wird eine gewisse Flexibilität und die für die 2D-Verformungsprozesse des FIM-Verfahrens notwendige begrenzte Verformbarkeit des in der durch das Beschichtungsmittel erhältlichen Beschichtung vorliegenden Netzwerks erreicht. Besteht diese Kette zwischen den Ester-Sauerstoffatomen der Acrylatfunktionen im Reaktivverdünner-Molekül aus nur drei Atome, wie es beispielsweise in Trimethylolpropan-triacrylat oder Dipentaeryhtrit-hexaacrylat der Fall ist, führt dieses zu einem besonders dichten Netzwerk in der durch das Beschichtungsmittel erhältlichen Beschichtung. Dieses dichte Netzwerk übersteht einen 2D-Prozess in einem FIM-Verfahren nachteilig nicht ohne Rissbildung.

Vorzugsweise beinhaltet diese die Ester-Sauerstoff-Atome der die (Meth)acrylatfunktionen im Molekül des Reaktivverdünners trennende Kette mindestens 9 Atome. Ebenfalls bevorzugt ist es, wenn diese Atome ausgewählt sind aus der Gruppe bestehend aus C-, N-, O-, S- und P-Atomen sowie Gemischen davon.

Vorteilhaft im Sinne der Erfindung sind Tri-acrylate des ethoxylierten Trimethylolpropans und Tetra-acrylate des ethoxylierten Pentaerythrites. Besonders vorteilhaft sind ethoxyliertes (4) Pentaerythrit-tetraacrylat (SR 494) und ethoxyliertes (9) Trimethylolpropan-triacrylat (SR 502). Ganz besonders vorteilhaft ist ethoxyliertes(4) Pentaerythrit-tetraacrylat (SR 494).

Unter thermoplastischen Polymeren im Sinne der vorliegenden Erfindung versteht man Polymethylmethacrylat (PMMA), Polyester verschiedener Art (z.B. PET, PEN, PBTP und UP), andere Kunststoffe, wie Hart-PVC, Celluloseestern (wie CA, CAB, CP), Polystyrol(PS) und Copolymere (SAN, SB und MBS), Polyacrylnitril (PAN), ABS-Kunststoffe, Acrylnitrilmethylmethacrylat (AMMA), Acrylnitril-Styrol-Acrylester (ASA), Polyurethan (PUR), Polyethylen (PE, PE-HD, -LD, -LLD, -C), Polypropylen (PP), Polyamid (PA), Polycarbonat (PC) oder Polyethersulfon (PES) (Kurzbezeichnungen nach DIN 7728T1).

Die Vicaterweichungstemperaturen VET (ISO 306) des mindestens einen thermoplastischen Polymers liegen bevorzugt im Bereich von mindestens 90°C, vorteilhaft mindestens 95°C, besonders vorteilhaft mindestens 100°C. Insbesondere sind lineare thermoplastische Polymere, die die vorstehenden Bedingungen erfüllen, bevorzugt.

Vorteilhaft als thermoplastisches Polymer und daher besonders bevorzugt ist Polymethylmethacrylat.

Unter Polymethylmethacrylat (PMMA) versteht man Polymethylmethacrylat-Homopolymer und Copolymere auf Methylmethacrylat-Basis mit dem Methylmethacrylat-Anteil von mehr als 70 Gew. %, wie sie beispielsweise unter den Handelsnamen *Degalan*®*, Degacryl*®*, Plexyglas*®*, Acrylite*® (Fa. Evonik), *Altuglas, Oroglas* (Fa. Arkema), *Elvacite*®*, Colacryl*®*, Lucite*® (Fa. Lucite) und unter anderem unter den Bezeichnungen *Acrylglas, Conacryl, Deglas, Diakon, Friacryl, Hesaglas, Limacryl, PerClax* und *Vitroflex* bekannt sind.

Bevorzugt sind PMMA-Homopolymere und Copolymere aus 70 Gew.-% bis 99,5 Gew.-% Methylmethacrylat und 0,5 Gew.-% bis 30 Gew.-% Methylacrylat. Besonders bevorzugt sind PMMA-Homopolymere und Copolymere aus 90 Gew.-% bis 99,5 Gew.-% Methylmethacrylat und 0,5 Gew.-% bis 10 Gew.-% Methylacrylat. Die Vicaterweichungstemperaturen VET (ISO 306) liegen in einer bevorzugten Ausführungsform im Bereich von mindestens 90°C, bevorzugt von 100°C bis 115°C.

Der Anteil des thermoplastischen Polymers beträgt im Festanteil des Beschichtungsmittels mindestens 30 Gew.-%, besonders bevorzugt mindestens 40 Gew.-% und ganz besonders bevorzugt 45 Gew.-%.

Der Begriff des mindestens einen Fotoinitiator des erfindungsgemäßen Beschichtungsmittel umfasst die gängigen dem Fachmann bekannten, kommerziell erhältlichen Verbindungen wie z. B. α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Photoinitiatoren allein oder in Kombination von zwei oder mehreren oder in Kombination mit einem der obigen Polymerisationsinitiatoren benutzt werden können.

Als UV-Fotoinitiatoren werden beispielsweise die IRGACURE®-Typen von BASF eingesetzt, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner werden die DAROCUR®-Typen von BASF eingesetzt, so beispielsweise die Typen DAROCUR® MBF, DAROCUR® 1173, DAROCUR® TPO, DAROCUR® 4265 eingesetzt. U.a. werden die weiteren UV-Photoinitiatoren eingesetzt, z.B. Esacure One (Fa. Lamberti).

Fotoinitiatoren sind mit im Bereich von ≥ 0,1 bis ≤ 10 Gewichtsteilen des Feststoffgehaltes des Beschichtungsmittels im Beschichtungsmittel enthalten.

Das Beschichtungsmittel enthält zudem über die 100 Gew.-Teile der Komponenten 1) bis 3) hinaus ein oder mehrere organische Lösungsmittel. Solche organischen Lösungsmittel können beispielsweise ausgewählt sein aus der Gruppe enthaltend aromatische Lösemittel, wie z.B. Xylol oder Toluol, Ketone, wie z.B. Aceton, 2-Butanon, Methyl-isobutylketon, Diacetonalkohol, Alkohole, wie z.B. Methanol, Ethanol, i-Propanol, Butanol,1-Methoxy-2-propanol, Ether, wie z.B. 1,4-Dioxan, Ethylenglykol-n-propylether, oder Ester, wie z.B. Essigsäureethylester, Essigsäurebutylester, 1-Methoxy-2-propylacetat oder Mischungen enthaltend diese Lösemittel.

Bevorzugt sind Ethanol, i-Propanol, Butanol, Essigsäureethylester, Essigsäurebutylester, 1-Methoxy-2-propanol, Diacetonalkohol, Xylol oder Toluol. Besonders bevorzugt sind i-Propanol, Butanol, Essigsäureethylester, Essigsäurebutylester, 1-Methoxy-2-propanol, Diacetonalkohol und deren Gemische. Ganz besonders bevorzugt sind 1-Methoxy-2-propanol und Diacetonalkohol, insbesondere bevorzugt ist 1-Methoxy-2-propanol.

Die Lackzusammensetzung enthält bevorzugt zusätzlich zu den 100 Gew.-Teilen der Komponenten a) bis c) 0 bis 900 Gew.-Teile, besonders bevorzugt 100 bis 850 Gew.-Teile, ganz besonders bevorzugt 200 bis 800 Gew.-Teile wenigstens eines organischen Lösungsmittels (Komponente d)).

Das Beschichtungsmittel kann zudem über die 100 Gew.-Teile der Komponenten a) bis c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Die Lackzusammensetzung enthält bevorzugt zusätzlich zu den 100 Gew.-Teilen der Komponenten a) bis c) 0 bis 35 Gew.-Teile, besonders bevorzugt 0 bis 30 Gew.-Teile, ganz besonders bevorzugt 0,1 bis 20 Gew.-Teile wenigstens eines weiteren Lackadditivs. Bevorzugt beträgt der Gesamtanteil aller in der Lackzusammensetzung enthaltenen Lackadditive 0 bis 20 Gew.-Teile, besonders bevorzugt 0 bis 10 Gew.-Teile, ganz besonders bevorzugt 0,1 bis 10 Gew.-Teile.

Die Zusammensetzung des Beschichtungsmittels kann anorganische Nanopartikel zur Erhöhung der mechanischen Beständigkeit, wie z.B. Kratzfestigkeit und/oder Bleistifthärte, enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75 %, besonders bevorzugt wenigstens 90 %, ganz besonders bevorzugt wenigstens 95 % aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Photoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Ein weiterer Gegenstand der vorliegenden Erfindung ist eine beschichtete Folie, umfassend eine Kunststofffolie und eine Beschichtung, die erhältlich ist durch Beschichten von mindestens einer Seite der Kunststofffolie mit einem Beschichtungsmittel gemäß der vorliegenden Erfindung.

Eine solche Folie weist somit eine Beschichtung auf, welche die Vorteile der vorliegenden Erfindung wie eine Kombination aus Blockfestigkeit, Kratz- und Lösemittelbeständigkeit sowie eine gewisse thermische Verformbarkeit in einem 2D-FIM-Prozeß aufweist. Damit sind die Folien der vorliegenden Erfindung in besonderer Weise zur Anwendung in 2D-FIM-Prozessen, insbesondere zur Herstellung von entsprechenden Formteilen mit kratz- und lösemittelbeständiger Oberfläche, geeignet. In besonderer Weise treten diese Vorteile zutage, wenn die Beschichtung direkt nach dem Beschichten getrocknet und mit UV-Strahlung gehärtet wurde. Daher ist eine Folie gemäß der vorliegenden Erfindung bevorzugt, deren Beschichtung direkt nach dem Auftragen getrocknet und mittels UV-Strahlung gehärtet worden ist.

Als zu beschichtende Folien werden bevorzugt transparente Thermoplasten wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt. Geeignete Thermoplasten sind beispielsweise Polyacrylate, Poly(meth)acrylate (z.B. PMMA; z.B. Plexiglas® des Herstellers Röhm), Cycloolefin-Copolymere (COC; z.B. Topas® des Herstellers Ticona; Zenoex® des Herstellers Nippon Zeon oder Apel® des Herstellers Japan Synthetic Rubber), Polysulfone (Ultrason® des Herstellers BASF oder Udel® des Herstellers. Solvay), Polyester, wie z.B. PET oder PEN, Polycarbonat (PC), Polycarbonat/Polyester-Blends, z.B. PC/PET, Polycarbonat/Polycyclohexylmethanolcyclohexandicarboxylat (PCCD; Xylecs® des Herstellers GE), Polycarbonat/PBT und Mischungen daraus.

In einer besonders vorteilhaften und bevorzugten Ausführungsform umfasst die Folie des erfindungsgemäßen Formkörpers Polycarbonat oder Copolycarbonat.

Die Beschichtung auf den erfindungsgemäßen Folien liegt in einer bevorzugten Ausführungsform in einer Schichtdicke im Bereich von ≥ 0,1 µm bis ≤ 50 µm, bevorzugt im Bereich von ≥ 1 µm bis ≤ 40 µm und besonders bevorzugt im Bereich ≥ 3 µm bis ≤ 30 µm vor. In diesen Bereichen kommt die Eigenschaftskombination der erfindungsgemäßen Beschichtung besonders vorteilhaft zum Tragen.

Aufgrund der hervorragenden Schlagzähigkeit bei gleichzeitiger Transparenz wird Polycarbonat im Rahmen der vorliegenden Erfindung auch als thermoplastisches Polymer zum Hinterspritzen der 2D-geformten und mit der Schutzschicht beschichteten Folie verwendet. In einer ebenfalls besonders bevorzugten Ausführungsform der vorliegenden Erfindung umfasst das thermoplastische Polymer damit Polycarbonat. Für die Erfindung geeignete Polycarbonate und Polycarbonat-Zubereitungen sowie Polycarbonat-Folien sind beispielsweise unter den Handelsnamen Makrolon®, Bayblend® und Makroblend® (Bayer MaterialScience AG, Leverkusen, Deutschland) erhältlich.

Geeignete Polycarbonate für die Herstellung der erfindungsgemäßen Polycarbonatzusammensetzungen sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Folie bzw. des thermoplastischen Polymers des 3D-Formkörpers können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Vorzugsweise sind die Formkörper der vorliegenden Erfindung durch ein 2D-Film-Insert-Molding-Verfahren erhältlich. Ein weiterer Gegenstand der vorliegenden Erfindung ist daher ein Verfahren zur Herstellung eines Formteils, umfassend die Schritte
(I) Beschichten einer Oberfläche einer Folie mit einem Beschichtungsmittel, umfassend
   (a) mindestens ein thermoplastisches Polymer in einem Gehalt von mindestens 30 Gew.-% des Festanteils des Beschichtungsmittels;
   (b) mindestens einen UV-härtbaren Reaktivverdünner in einem Gehalt von mindestens 30 Gew.-% des Festanteils des Beschichtungsmittels;
   (c) mindestens einen Fotoinitiator; und
   (d) mindestens ein organischen Lösungsmittel,
   wobei der Anteil an ethylenisch ungesättigten Gruppen mindestens 3 mol pro kg des Festanteils des Beschichtungsmittels beträgt,
   wobei der mindestens eine Reaktivverdünner mindestens drei polymerisierbare (Meth)acrylatfunktionen im Molekül aufweist und
   wobei die Ester-Sauerstoff-Atome der (Meth)acrylatfunktionen im Molekül des Reaktivverdünners durch eine Kette von mindestens sechs Atomen voneinander getrennt sind;
(II) Trocknen der Beschichtung;
(III) Härten der Beschichtung durch aktinische Strahlung, vorzugsweise UV-Strahlung;
(IV) Thermisches und/oder mechanisches Verformen der Folie;
(V) Hinterschichten der unbeschichteten Oberfläche der Folie mit einem thermoplastischen Polymer,
wobei die Schritte (IV) und (V) sukzessive oder bevorzugt gleichzeitig durchgeführt werden können.

Bei dem Beschichtungsmittel handelt es sich allgemein um das Beschichtungsmittel gemäß der vorliegenden Erfindung. Auch für die Folie gilt das vorstehend für die erfindungsgemäßen Folie beschriebene, insbesondere zur Zusammensetzung und der Schichtdicke der erhaltenen Beschichtung auf der Folie.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (II) umfasst bevorzugt das Ablüften bei Raumtemperatur und/oder erhöhter Temperatur, wie vorzugsweise bei 20 - 200°C, besonders bevorzugt bei 40 - 120°C. Nach dem Trocknen der Beschichtung ist diese blockfest, so dass das beschichtete Substrat, insbesondere die beschichtete Folie, kaschiert und/oder bedruckt werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Unter Härten versteht man insbesondere ein Härten mit aktinischer Strahlung. Darunter versteht man die radikalische Polymerisation von ethylenisch ungesättigten Kohlenstoff-KohlenstoffDoppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gewichts-% bis ≤ 10 Gewichts-%, besonders bevorzugt von ≥ 0,2 Gewichts-% bis ≤ 3,0 Gewichts-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² eingesetzt.

Das Hinterspritzen der beschichteten Folie nach erfolgter Härtung der Folienbeschichtung und der Umformung der beschichteten Folie ist dem Fachmann durch das film insert molding-Verfahren, wie es beispielsweise in WO 2004/082926 A1 und WO 02/07947 A1 beschrieben ist, wohlbekannt. In einer bevorzugten Ausführungsform des erfindungsgemäßen Verfahrens erfolgt das Hinterschichten der Folie in Schritt (V) mittels Extrusion oder Spritzguss, vorzugsweise mit Polycarbonatschmelze. Die Verfahren der Extrusion und des Spritzgusses hierzu sind dem Fachmann wohlbekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

In einer bevorzugten Ausführungsform ist die Reihenfolge der Schritte variiert. In dieser bevorzugten Ausführungsform erfolgt das Verformen der Folie des Schrittes (IV) gleichzeitig mit dem Schritt (V), also dem Hinterspritzen mit einem thermoplastischen Polymer, insbesondere Polycarbonat. In dieser Ausführungsform wird die beschichtete Folie, bei der die Beschichtung schon getrocknet und gehärtet vorliegt, noch optional zugeschnitten und bedruckt und in eine Spritzgussform eingebracht. Nach Schließen der Form wird die Folie dann mit dem thermoplastischen Polymer hinterspritzt. Auf diese Art und Weise wird auf besonders effiziente Art und Weise ein Formkörper erhalten, dessen Oberfläche die Vorteile der erfindungsgemäßen Beschichtung aufweist.

Ein weiterer Gegenstand der vorliegenden Erfindung ist daher auch ein Formkörper, umfassend eine beschichtete Folie gemäß der vorliegenden Erfindung, bevorzugt umfassend Polycarbonat und erhältlich durch ein 2D-Film-Insert-Molding-Verfahren.

Aufgrund der besonders vorteilhaften Eigenschaftskombination der durch das erfindungsgemäße Beschichtungsmittel erhältlichen Beschichtung eignen sich das erfindungsgemäße Beschichtungsmittel sowie die erfindungsgemäße Folie in besonderer Weise zur Herstellung von Formkörpern in 2D-Film-Insert-Molding-Verfahren. Ein weiterer Gegenstand der vorliegenden Erfindung ist daher die Verwendung des erfindungsgemäßen Beschichtungsmittels oder der erfindungsgemäßen beschichteten Folie für die Herstellung von Formkörpern in 2D-Film-Insert-Molding-Verfahren.

### Beispiele:

### Bewertungsmethoden

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

### Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

### Bewertung der Stahlwolle-Verkratzung

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird, wobei die Fläche des Hammer 2,5 cm x 2,5 cm, d.h. ca. 6,25 cm2 beträgt. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgt vor und nach Verkratzung. Angegeben werden die Differenzwerte bei Glanz und Haze vor und nach Belastung als ΔGlanz und Δ Haze.

### Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23°C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

### Beispiel 1

175 g Degacryl M547 (Evonik) wurde in 994 g 1-Methoxy-2-propanol bei 100 °C innerhalb von ca. 3 h komplett gelöst. Die Lösung wurde bis auf ca. 30 °C abgekühlt. Separat wurden in 581 g 1-Methoxy-2-propanol bei Raumtemperatur folgende Komponenten gelöst: 252 g ethoxyliertes (4) Pentaerythrit-tetraacrylat (SR 494, Sartomer), 10,1 g Esacure One (Lamberti), 5,04 g Darocur 4265 (BASF), 0,9 g BYK 333 (BYK). Die zweite Lösung wurde der Polymerlösung unter Rühren zugegeben. Das so erhaltene Beschichtungsmittel wurde noch 3 h bei Raumtemperatur und unter Abschirmung des direkten Lichteinflusses gerührt, abgefüllt und 1 Tag ruhen gelassen. Die Ausbeute betrug 2000 g, die Viskosität (23 °C) 1380 mPas und der Feststoffgehalt 22 Gew.%. Die berechnete Doppelbindungsdichte im Feststoffanteil des Beschichtungsmittels betrug ca. 4,5 mol/kg.

### Beispiel 2

200 g Degacryl M547 (Evonik) wurden in 1136 g 1-Methoxy-2-propanol bei 100 °C innerhalb von ca. 3 h komplett gelöst. Die Lösung wurde bis auf ca. 30 °C abgekühlt. Separat wurden in 664 g 1-Methoxy-2-propanol bei Raumtemperatur folgende Komponenten gelöst: 200 g ethoxyliertes (4) Pentaerythrit-tetraacrylat (SR 494, Sartomer), 8 g Esacure One (Lamberti), 4 g Darocur 4265 (BASF), 1 g BYK 333 (BYK). Die zweite Lösung wurde der Polymerlösung unter Rühren zugegeben. Das so erhaltene Beschichtungsmittel wurde noch 3 h bei Raumtemperatur und unter Abschirmung des direkten Lichteinflusses gerührt, abgefüllt und 1 Tag ruhen gelassen. Die Ausbeute betrug 2200 g, die Viskosität (23 °C) 1800 mPas, der Feststoffgehalt 19 Gew.%. Die berechnete Doppelbindungsdichte im Feststoffanteil des Beschichtungsmittels betrug ca. 3,8 mol/kg.

### Vergleichsbeispiel 1

275 g Degacryl M547 (Evonik) wurden in 1562 g 1-Methoxy-2-propanol bei 100 °C innerhalb von ca. 3h komplett gelöst. Die Lösung wurde bis auf ca. 30 °C abgekühlt. Separat wurden in 913 g 1-Methoxy-2-propanol bei Raumtemperatur folgende Komponenten gelöst: 275 g Dipentaerythritpenta/hexaacrylat (DPHA, Cytec), 11 g Esacure One (Lamberti), 5,5 g Darocur 4265 (BASF), 1,4 g BYK 333 (BYK). Die zweite Lösung wurde der Polymerlösung unter Rühren zugegeben. Das so erhaltene Beschichtungsmittel wurde noch 3 h bei Raumtemperatur und unter Abschirmung des direkten Lichteinflusses gerührt, abgefüllt und 1 Tag ruhen gelassen. Die Ausbeute betrug 3000 g, die Viskosität (23 °C) 2453 mPas und der Feststoffgehalt 19 Gew.%. Die berechnete Doppelbindungsdichte in Feststoffanteil des Beschichtungsmittels betrug ca. 5,1 mol/kg.

### Beispiel 3

Die Beschichtungsmittel entsprechend den Beispielen 1 und 2 sowie Vergleichsbeispiel 1 wurden mittels Schlitzgießer auf eine Trägerfolie, z.B. Makrofol DE 1-1 (Bayer MaterialScience AG, Leverkusen, Deutschland), aufgetragen.

Typische Antragsbedingungen waren wie folgt:
- Bahngeschwindigkeit 1,3 bis 2,0 m/min
- Nasslackauftrag 20 - 150 µm
- Umlufttrockner 90 - 110 °C, bevorzugt im Bereich der T_{g} des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folie wurde durch eines der oben genannten Antragsaggregate geführt und mit der Beschichtungslösung beaufschlagt. Danach wurde die Folie mit der nassen Beschichtung durch den Trockner gefahren. Nach dem Ausgang aus dem Trockner wurde die jetzt getrocknete Beschichtung in eine UV-Härtungs-Anlage kontinuierlich überführt und dann mit einer Kaschierfolie versehen, um diese vor Verschmutzung und Verkratzung zu schützen. Danach wurde die Folie wieder aufgerollt.

### Beispiel 4

Die Chemikalien- und Kratzbeständigkeit der beschichteten Seiten der beschichteten Folien aus Beispiel 3 wurden wie oben angegeben getestet. Die Ergebnisse sind in Tabelle 1 zusammengefasst.

**Tabelle 1: Chemikalien- und Kratzbeständigkeit der Beschichtungen**

| Beschichtungsmittel/Schichtdicke auf 250 µm PC-Folie | Lösemittel | Bleistifthärte | Stahlwolle (Fa. Rakso, No. 00) |
|---|---|---|---|
| | IP/MPA/X/E A/Ac 1h/RT | 500 g Mitsubishi | 560 g / 10 DH ΔG / ΔH |
| Beispiel 1 / 6µm | 0/0/0/0/1 | B | 2/3 |
| Beispiel 1 / 11µm | 0/0/0/0/1 | HB | 1/2 |
| Beispiel 1 / 16µm | 0/0/0/0/1 | HB | 3/3 |
| Beispiel 1 / 22µm | 0/0/0/0/0 | F | 3/4 |
| Beispiel 1 / 25µm | 0/0/0/0/1 | H | 2/3 |
| Beispiel 2 / 5µm | 0/0/0/1/5 | B | 0/1 |
| Beispiel 2 / 8µm | 0/0/0/0/5 | HB | 3/6 |
| Beispiel 2 / 13µm | 0/0/0/0/0 | HB | 0/4 |
| Beispiel 2 / 17µm | 0/0/0/0/0 | F | 2/1 |
| Beispiel 2 / 23µm | 0/0/0/0/0 | H | 2/4 |
| Vergleichsbeispiel 1 / 6µm | 0/0/0/0/1 | B | 3/4 |
| Vergleichsbeispiel 1 / 9µm | 0/0/0/0/0 | B | 1/4 |
| Vergleichsbeispiel 1 / 12µm | 0/0/0/0/0 | HB | 5/9 |
| Vergleichsbeispiel 1 / 16µm | 0/0/0/0/0 | HB | 9/16 |
| Vergleichsbeispiel 1 / 23µm | 0/0/0/0/0 | F | 3/8 |
| Makrofol DE 1-1 250 µm, unbeschichtet | 0/5/5/5/5 | 3B | 100/285 |

IP/MPA/X/EA/Ac steht für Isopropanol, 1-Methoxy-2-propylacetat, Xylol, Ethylacetat, Aceton RT steht für Raumtemperatur, hier ca. 23°C.

Wie die Tabelle 1 zeigt, verbessert die erfindungsgemäße Beschichtung sogar in dünner Schicht die Bleistifthärte und Kratzfestigkeit der Folie deutlich gegenüber den bekannten Eigenschaften des Polycarbonats. Die erfindungsgemäße Beschichtung verleiht auch eine hohe Lösemittelbeständigkeit.

### Beispiel 5

Die erfindungsgemäße beschichtete Folie lässt sich mit dem oben beschriebenen Verfahren nach heutigem Stand der Technik verformen.

Im Film-insert molding-Verfahren wird die erfindungsgemäße Folie optional rückseitig bedruckt, in die gewünschte Form gestanzt oder zugeschnitten und in die Spritzgussform eingelegt. Die Spritzguss-Versuche erfolgten mit einer Spritzguss-Maschine des Types Arburg TYP: 570C 2000-675 / 350. Nach Schließen der Form wurde die Folie mit Makrolon 2405 (Bayer) mit einer Massetemperatur von 280 °C hinterspritzt. Die Füllzeit zur Füllung des Werkzeuges betrug 2 Sekunden. Die Werkzeugtemperatur wurde variiert. Es konnten gute Ergebnisse mit einer Werkzeugtemperatur im Bereich von 80°C und 100°C erreicht werden. Einen negativen Effekt gab es diesbezüglich visuell nicht. Die Nachdruckzeit betrug 12 Sekunden und die Kühlzeit lag bei 20 Sekunden.

Zu beachten war hierbei, dass die leichte Verformung von Folie und Lack hierbei sehr schnell und ohne besondere Aufheizung erfolgte. Diese Verformung überstehen viele handelsübliche Hardcoats nicht ohne Rissbildung.

Durch das Verfahren wurden aus den Folien des Beispiels 3 (Beschichtungsmittel aus Beispielen 1 und 2 sowie des Versuchsbeispiels 1) die Heizungs-Lüftungsblenden (HL-Blenden) hergestellt. Die Oberflächen, speziell die kritischen Radien, wurden nach Herstellung der HL-Blenden optisch mittels eines Mikroskops von ZEISS, Typ: Axioplan (Vergrößerung 6x) beurteilt. Positiv bewertet wurden die Proben ohne sichtbare Risse auf der ganzen Oberfläche.

Die Ergebnisse sind in Tabelle 2 zusammengefasst:

**Tabelle 2: Beurteilung der Frontoberfläche der im Film-Insert-Molding-Verfahren hergestellten Kunststoffteile**

| Beschichtungsmittel/Schichtdicke auf 250 µm PC-Folie | Beobachtung in optischen Stereomikroskop (Vergrößerung 6x) |
|---|---|
| Beispiel 1 / 6 µm | rissfreie Oberfläche |
| Beispiel 1 / 11 µm | rissfreie Oberfläche |
| Beispiel 1 / 16 µm | rissfreie Oberfläche |
| Beispiel 2 / 5 µm | rissfreie Oberfläche |
| Beispiel 2 / 8 µm | rissfreie Oberfläche |
| Beispiel 2 / 13 µm | rissfreie Oberfläche |
| Beispiel 2 / 17 µm | rissfreie Oberfläche |
| Vergleichsbeispiel 1 / 6 µm | rissfreie Oberfläche |
| Vergleichsbeispiel 1 / 9 µm | vereinzelte Risse |
| Vergleichsbeispiel 1 / 12 µm | vereinzelte Risse |
| Vergleichsbeispiel 1 / 16 µm | vereinzelte Risse |

Die Versuche haben gezeigt, dass die erfindungsgemäßen Folien mit den Beschichtungen aus den Beispielen 1 und 2 die 2D-Verformung im Hinterspritzvorgang ohne Probleme überstehen, ohne dass die Hartcoatschicht dabei Schaden nahm. Das erfindungsgemäße Beschichungsmittel beinhaltet in dem Falle ethoxyliertes (4) Pentaerythrit-tetraacrylat (SR 494, Sartomer) als Reaktivverdünner. Die kürzeste Verbindungskette zwischen zwei Acrylatgruppen in Molekül dieses Reaktivverdünners beinhaltete erfindungsgemäß 9 Atome.

Im Gegenteil bekommen Folien mit den Beschichtungen aus dem Vergleichsbeispiel 1 nach der 2D-Verformung im Hinterspritzvorgang vereinzelte Risse im Bereich der stärksten Verformung. Das Beschichungsmittel beinhaltet in diesem Falle Dipentaerythrit-penta/hexaacrylat (DPHA, Cytec) als Reaktivverdünner. Die kürzeste Verbindungskette zwischen zwei Acrylatgruppen in Molekül dieses Reaktivverdünners beinhaltet nur 3 Atome.

## Patentansprüche

1. Beschichtungsmittel, umfassend
(a) mindestens ein thermoplastisches Polymer in einem Gehalt von mindestens 30 Gew.-% des Festanteils des Beschichtungsmittels;
(b) mindestens einen UV-härtbaren Reaktiwerdünner in einem Gehalt von mindestens 30 Gew.-% des Festanteils des Beschichtungsmittels;
(c) mindestens einen Fotoinitiator; und
(d) mindestens ein organischen Lösungsmittel,
wobei der Anteil an ethylenisch ungesättigten Gruppen mindestens 3 mol pro kg des Festanteils des Beschichtungsmittels beträgt,
wobei der mindestens eine Reaktivverdünner mindestens drei polymerisierbare (Meth)acrylatfunktionen im Molekül aufweist und
wobei die Ester-Sauerstoff-Atome der (Meth)acrylatfunktionen im Molekül des Reaktivverdünners durch eine Kette von mindestens sechs Atomen voneinander getrennt sind.

2. Beschichtungsmittel gemäß Anspruch 1, wobei der Anteil an ethylenisch ungesättigten Gruppen mindestens 3,5 mol pro kg des Festanteils des Beschichtungsmittels, bevorzugt mindestens 4 mol pro kg des Festanteils des Beschichtungsmittels beträgt.

3. Beschichtungsmittel gemäß mindestens einem der vorstehenden Ansprüche, wobei die Atome der die Ester-Sauerstoff-Atome der Acrylatfunktionen im Molekül des Reaktivverdünners trennenden Kette ausgewählt sind aus C, N, O, S und P-Atomen sowie Kombinationen davon.

4. Beschichtungsmittel gemäß mindestens einem der vorstehenden Ansprüche, wobei die Ester-Sauerstoff-Atome der Acrylatfunktionen im Molekül des Reaktivverdünners durch eine Kette von mindestens neun Atomen voneinander getrennt sind.

5. Beschichtungsmittel gemäß mindestens einem der vorstehenden Ansprüche, wobei der mindestens eine Reaktivverdünner ausgewählt ist aus der Gruppe bestehend aus Triacrylaten von ethoxyliertem Trimethylolpropan, Tetraacrylaten von ethoxyliertem Pentaerythrit.

6. Beschichtungsmittel gemäß Anspruch 5, wobei der Reaktivverdünner ethoxyliertes (4) Pentaerythrit-tetraacrylat und/oder ethoxyliertes (9) Trimethylolpropan-triacrylat, bevorzugt ethoxyliertes (4) Pentaerythrit-tetraacrylat ist.

7. Beschichtungsmittel gemäß mindestens einem der vorstehenden Ansprüche, wobei das thermoplastische Polymer PMMA-Homopolymere und/oder Copolymere aus 70 Gew.-% bis 99,5 Gew.-% Methylmethacrylat und 0,5 Gew.-% bis 30 Gew.-% Methylacrylat umfasst.

8. Beschichtungsmittel gemäß mindestens einem der vorstehenden Ansprüche, wobei das Lösungsmittel 1-Methoxy-2-propanol ist.

9. Beschichtete Folie, umfassend eine Kunststofffolie und eine Beschichtung, die erhältlich ist durch Beschichten von mindestens einer Seite der Kunststofffolie mit einem Beschichtungsmittel gemäß mindestens einem der Ansprüche 1 bis 8.

10. Beschichtete Folie gemäß Anspruch 9, wobei die Beschichtung direkt nach dem Beschichten getrocknet und gehärtet wurde.

11. Beschichtete Folie gemäß Anspruch 9 oder Anspruch 10, wobei der Kunststoff der Kunststofffolie ausgewählt ist aus Polycarbonat, Copolycarbonat, Polyester, Polyethylenterephthalat, Polypropylen, Polystyrol, Polyvinylchlorid, bevorzugt Polycarbonat und/oder Copolycarbonat.

12. Beschichtete Folie gemäß mindestens einem der Ansprüche 9 bis 11, wobei die Beschichtung in einer Schichtdicke im Bereich von ≥ 0,1 µm bis ≤ 50 µm, bevorzugt im Bereich von ≥ 1 µm bis ≤ 40 µm und besonders bevorzugt im Bereich ≥ 3 µm bis ≤ 30 µm vorliegt.

13. Verfahren zur Herstellung eines Formteils, umfassend die Schritte
(I) Beschichten einer Oberfläche einer Folie mit einem Beschichtungsmittel gemäß mindestens einem der Ansprüche 1 bis 8;
(II) Trocknen der Beschichtung;
(III) Härten der Beschichtung durch aktinische Strahlung, vorzugsweise UV-Strahlung;
(IV) Thermisches und/oder mechanisches Verformen der Folie;
(V) Hinterschichten der unbeschichteten Oberfläche der Folie mit mindestens einem thermoplastischen Polymer,
wobei die Schritte (IV) und (V) sukzessive oder gleichzeitig durchgeführt werden können.

14. Verfahren gemäß Anspruch 13, wobei die Schritte (IV) und (V) zeitgleich erfolgen.

15. Formkörper, umfassend mindestens eine beschichtete Folie gemäß mindestens einem der Ansprüche 9 bis 12, bevorzugt umfassend Polycarbonat und erhältlich durch 2D-Film-Insert-Molding Verfahren.

## Claims

1. Coating agent, comprising
(a) at least one thermoplastic polymer in a proportion of at least 30% by weight of the solid content of the coating agent;
(b) at least one UV hardenable reactive thinner in a proportion of at least 30% by weight of the solid content of the coating agent;
(c) at least one photo-initiator; and
(d) at least one organic solvent,
wherein the proportion of ethylenically unsaturated groups amounts to at least 3 mol per kg of the solid content of the coating agent,
wherein the at least one reactive thinner comprises at least three polymerisable (meth)acrylate functions in the molecule and
wherein the ester-oxygen atoms of the (meth)acrylate functions in the molecule of the reactive thinner are separated from one another by a chain of at least six atoms.

2. Coating agent according to Claim 1, wherein the proportion of ethylenically unsaturated groups amounts to at least 3.5 mol per kg of the solid content of the coating agent, preferably at least 4 mol per kg of the solid content of the coating agent.

3. Coating agent according to at least one of the above claims, wherein the atoms of the chain separating the ester-oxygen atoms of the acrylate functions in the molecule of the reactive thinner are selected from C, N, O, S and P atoms and combinations thereof.

4. Coating agent according to at least one of the above claims, wherein the ester-oxygen atoms of the acrylate functions in the molecule of the reactive thinner are separated from one another by a chain of at least nine atoms.

5. Coating agent according to at least one of the above claims, wherein the at least one reactive thinner is selected from the group consisting of triacrylates of ethoxylated trimethylol propane, tetraacrylates of ethoxylated pentaerythrite.

6. Coating agent according to Claim 5, wherein the reactive thinner is ethoxylated (4) pentaerythrite-tetraacrylate and/or ethoxylated (9) trimethylol propane-triacrylate, preferably ethoxylated (4) pentaerythrite-tetraacrylate.

7. Coating agent according to at least one of the above claims, wherein the thermoplastic polymer comprises PMMA homopolymers and/or copolymers made of 70% by weight to 99.5% by weight methylmethacrylate and 0.5% by weight to 30% by weight methylacrylate.

8. Coating agent according to at least one of the above claims, wherein the solvent is 1-methoxy-2-propanol.

9. Coated film, comprising a synthetic-material film and a coating, which can be obtained by coating at least one side of the synthetic-material film with a coating agent according to at least one of Claims 1 to 8.

10. Coated film according to Claim 9, wherein the coating is dried and hardened directly after the coating.

11. Coated film according to Claim 9 or Claim 10, wherein the synthetic material of the synthetic-material film is selected from polycarbonate, copolycarbonate, polyester, polyethylene terephthalate, polypropylene, polystyrene, polyvinylchloride, preferably polycarbonate and/or copolycarbonate.

12. Coated film according to at least one of Claims 9 to 11, wherein the coating is present with a layer thickness in the range from ≥ 0.1 µm to ≤ 50 µm, preferably in the range from ≥ 1 µm to ≤ 40 µm and by particular preference in the range from ≥ 3 µm to ≤ 30 µm.

13. Method for manufacturing a moulded part, comprising the steps
(I) Coating of a surface of a film with a coating agent according to at least one of Claims 1 to 8;
(II) Drying of the coating;
(III) Hardening of the coating through actinic radiation, preferably UV radiation;
(IV) Thermal and/or mechanical deformation of the film;
(V) Back coating of the uncoated surface of the film with at least one thermoplastic polymer,
wherein the steps (IV) and (V) can be implemented successively or simultaneously.

14. Method according to Claim 13, wherein the steps (IV) and (V) take place simultaneously.

15. Moulded bodies, comprising at least one coated film according to at least one of Claims 9 to 12, preferably comprising polycarbonate and obtainable through 2-D film-insert moulding processes.

## Revendications

1. Agent de revêtement, comprenant :
(a) au moins un polymère thermoplastique en une teneur d'au moins 30 % en poids de la fraction solide de l'agent de revêtement ;
(b) au moins un diluant réactif durcissable par UV en une teneur d'au moins 30 % en poids de la fraction solide de l'agent de revêtement ;
(c) au moins un photoinitiateur ; et
(d) au moins un solvant organique,
la proportion de groupes éthyléniquement insaturés étant d'au moins 3 moles par kg de la fraction solide de l'agent de revêtement,
ledit au moins un diluant réactif comprenant au moins trois fonctions (méth)acrylate polymérisables par molécule, et
les atomes d'oxygène d'ester des fonctions (méth)acrylate dans la molécule du diluant réactif étant séparés les uns des autres par au moins six atomes.

2. Agent de revêtement selon la revendication 1, dans lequel la proportion de groupes éthyléniquement insaturés est d'au moins 3,5 moles par kg de fraction solide de l'agent de revêtement, de préférence d'au moins 4 moles par kg de la fraction solide de l'agent de revêtement.

3. Agent de revêtement selon au moins l'une quelconque des revendications précédentes, dans lequel les atomes de la chaîne séparant les atomes d'oxygène d'ester des fonctions acrylate dans la molécule du diluant réactif sont choisis parmi les atomes C, N, O, S et P, ainsi que leurs combinaisons.

4. Agent de revêtement selon au moins l'une quelconque des revendications précédentes, dans lequel les atomes d'oxygène d'ester des fonctions acrylate dans la molécule du diluant réactif sont séparés les uns des autres par une chaîne d'au moins neuf atomes.

5. Agent de revêtement selon au moins l'une quelconque des revendications précédentes, dans lequel ledit au moins un diluant réactif est choisi dans le groupe constitué par les triacrylates de triméthylolpropane éthoxylé, les tétraacrylates de pentaérythritol éthoxylé.

6. Agent de revêtement selon la revendication 5, dans lequel le diluant réactif est le tétraacrylate de pentaérythritol éthoxylé (4) et/ou le triacrylate de triméthylolpropane éthoxylé (9), de préférence le tétraacrylate de pentaérythritol éthoxylé (4).

7. Agent de revêtement selon au moins l'une quelconque des revendications précédentes, dans lequel le polymère thermoplastique comprend des homopolymères et/ou copolymères de PMMA constitués par 70 % en poids à 99,5 % en poids de méthacrylate de méthyle et 0,5 % en poids à 30 % en poids d'acrylate de méthyle.

8. Agent de revêtement selon au moins l'une quelconque des revendications précédentes, dans lequel le solvant est le 1-méthoxy-2-propanol.

9. Film revêtu, comprenant un film en matière plastique et un revêtement, qui peut être obtenu par revêtement d'au moins un côté du film en matière plastique avec un agent de revêtement selon au moins l'une quelconque des revendications 1 à 8.

10. Film revêtu selon la revendication 9, dans lequel le revêtement a été séché et durci directement après le revêtement.

11. Film revêtu selon la revendication 9 ou la revendication 10, dans lequel la matière plastique du film en matière plastique est choisie parmi le polycarbonate, le copolycarbonate, le polyester, le polyéthylène téréphtalate, le polypropylène, le polystyrène, le polychlorure de vinyle, de préférence le polycarbonate et/ou le copolycarbonate.

12. Film revêtu selon au moins l'une quelconque des revendications 9 à 11, dans lequel le revêtement se présente en une épaisseur de couche dans la plage allant de ≥ 0,1 µm à ≤ 50 µm, de préférence dans la plage allant de ≥ 1 µm à ≤ 40 µm, et de manière particulièrement préférée dans la plage allant de ≥ 3 µm à ≤ 30 µm.

13. Procédé de fabrication d'une pièce moulée, comprenant les étapes suivantes :
(I) le revêtement d'une surface d'un film avec un agent de revêtement selon au moins l'une quelconque des revendications 1 à 8 ;
(II) le séchage du revêtement ;
(III) le durcissement du revêtement par un rayonnement actinique, de préférence un rayonnement UV ;
(IV) la déformation thermique et/ou mécanique du film ;
(V) la stratification de la surface non revêtue du film avec au moins un polymère thermoplastique,
les étapes (IV) et (V) pouvant être réalisées successivement ou simultanément.

14. Procédé selon la revendication 13, dans lequel les étapes (IV) et (V) ont lieu simultanément.

15. Corps moulé, comprenant au moins un film revêtu selon au moins l'une quelconque des revendications 9 à 12, de préférence comprenant un polycarbonate, et pouvant être obtenu par le procédé de moulage par insertion d'un film 2D.
